# FASCICULE DE BREVET EUROPEEN

(11) **EP 0 766 509 B1**
(45) Date de publication et mention de la délivrance du brevet: **30.05.2001**
(21) Numéro de dépôt: 95911358.0
(22) Date de dépôt: 01.03.1995
(51) Int. Cl.: A01G 31/00

(54) **SUBSTRAT DE CULTURE FIBREUX A BASE D'ESTER DE CELLULOSE**
KULTURSUBSTRAT AUF ZELLULOSEESTERBASIS
FIBROUS CELLULOSE-BASED CULTURE SUBSTRATE

(30) Priorité: 02.03.1994 FR 9402616
(43) Date de publication de la demande: 09.04.1997
(73) Titulaire: AVENTIS CROPSCIENCE S.A., 69009 Lyon (FR)
(72) Inventeur: ARNAULT, Jean-Louis, F-69006 Lyon (FR); DUPUIS, Jean-Marc, F-69009 Lyon (FR); TEUFEL, Eberhard, D-79194 Gundelfingen (DE); PEPIN, Régis, F-69210 Sourcieux-les-Mines (FR)
(86) Numéro de dépôt international: FR9500237
(87) Numéro de publication internationale: WO9523500

(56) Documents cités:
- EP-A- 0 147 349
- FR-A- 2 248 780
- APPLIED MICROBIOLOGY, vol.26, no.3, Septembre 1973 pages 414 - 416 M. G. GABRIDGE 'Cultivation of Mycoplasmas on Cellulose Ester Substrates'
- 'ULLMANN'S ENCYCLOPEDIA OF INDUSTRIAL CHEMISTRY' 1986 , VCH VERLAGS G.M.B.H. , WEINHEIM, DE cité dans la demande

## Description

La présente invention concerne un nouveau procédé de culture des plantes agricoles et horticoles.

Il est connu, notamment en culture maraîchère, en horticulture et en culture en pépinières forestières, d'utiliser des techniques de mise en germination des semences sur des mottes, qui sont ensuite implantées mécaniquement plutôt que des semis directs. Ils peuvent ainsi garantir un peuplement régulier, raccourcir la période de végétation ou bien, dans les cultures sous serre, augmenter la productivité par une meilleure maîtrise des intrants (engrais, oligoéléments...) apportés par l'eau d'irrigation.

Les mottes utilisées sont principalement constituées de mélanges de tourbes extraites dans les régions de marais. Elles peuvent être mélangées à d'autres fibres (bois , coco) ou à des matériaux d'origine minérale (pouzzolane, schistes, argile, vermiculite, laine de roche, laine de verre...).

Il a par ailleurs été proposé d'utiliser de la pulpe ou des granulés d'acétate de cellulose comme substrat de culture.

Il a par ailleurs été proposé d'utiliser de la cellulose et de l'acétate de cellulose stériles comme substrats de culture stériles pour la micropropagation.

Dans certaines régions, l'intensification des cultures sous serre s'est traduite par une forte augmentation des intrants, dont une partie est dispersée dans le sol. Les techniques hors sol en milieu non stériles sont donc maintenant recherchées car elles favorisent la diminution des consommations d'eau et d'intrants (recyclés) et limite les rejets dans le sol. Cependant ces techniques impliquent l'utilisation de substrats non organiques et de matériaux plastiques, dont l'élimination, de plus en plus rendue nécessaire par la réglementation, est difficile et coûteuse.

De plus l'intensification des cultures et la demande par la clientèle de plantules repiquables en excellente santé végétative renforce le besoin de procédés utilisant des substrats permettant un bon ancrage des racines des plantules et ayant un ensemble particulièrement exigeant des caractéristiques suivantes: absence de toxicité, bon état sanitaire, bonne répartition de l'air et de l'eau, bonnne résistance au tassement au cours du temps, bon stockage et bonne restitution des éléments nutritifs(capacité d'échange cationique).

La présente invention a donc pour but de fournir un nouveau procédé de culture de plantes utilisant un substrat non stérile à biodégradibilité contrôlée, présentant de telles caractéristiques et pouvant permettre la transplantation des plantules élevées dans un tout autre milieu de culture naturel(sol) ou artificiel.

L'invention a donc pour objet un procédé de culture de plantes agricoles et horticoles, caractérisé en ce qu'on utilise un substrat de culture de matériel de reproduction végétal essentiellement constitué d'une matière fibreuse non stérile à base d'un ester d'acide aliphatique inférieur et de cellulose.

Par matériel de reproduction végétal, on entend au sens de la présente invention, tout tissu végétal capable, lorsqu'il est mis dans des conditions de culture convenable, de donner une plante entière, comme par exemple une graine, naturelle ou artificielle, une plantule, une bouture ou un tissu méristèmatique.

Par tissu méristèmatique, on entend tout tissu végétal, ou ensemble de cellules végétales, capables, lorsqu'il est mis dans des conditions convenables, de se développer jusqu'à former une plante entière ou partie de plante entière. Dans cette expression on inclut toute sorte de tissus végétaux, notamment: le tissu somatique, l'embryon somatique, le tissu zygotique, le germe, le bourgeon adventice, les pousses, le primordium de tige (connu en anglais sous le nom de shoot primordium), les analogues de protocorm (connus en anglais sous le nom de protocorm-like body), le tissu connu en anglais sous le nom de green spot, les cellules germinales et semences naturelles (connues en anglais sous le nom de germ line).

Le matériel végétal ainsi défini peut appartenir à toute espèce appartenant notamment aux cultures vivrières annuelles ou perennes, telles que les betteraves sucrières ou fourragères, le maïs, le colza; les cultures légumières telles que le céleri, les salades, le chou, le chou-fleur, la carotte, l'aubergine, le piment, la tomate, l'oignon, l'ail, le gingembre, les fraises, les melons, les pastèques, le concombre, l'asperge; les cultures vivrières ou industrielles telles que la canne à sucre, le tabac; les cultures de plantes médicinales telles que belladone, ginseng ou if; les cultures ornementales destinées aux plantations en massif en conteneur, en serre telles que chrysanthèmes, les glaïeuls, les lys, les orchidées, les amaryllis, les géraniums, les bégonias, les violettes du Cap, les poinsettias; des arbres, des arbustes ou espèces arborescentes à feuillage résistant ou caduc tels que les résineux, les érables, les palmiers, le caféier, le cacaoyer, les arbres fruitiers, la vigne.

Par ester de cellulose, on entend toute matière à base de cellulose estérifiée àl'aide d'un acide aliphatique inférieur, à des dégrés divers, telle que décrite dans Ullman's Encyclopedia of Industrial Chemistry, 8th completely revised Edition, Vol. A5; VCH Verlags G.m.b.H, Weinheim, RFA 1986, qui décrit également les matières fibreuses à base de ces esters ainsi que leur procédés de fabrication. De préférence l'ester de cellulose est un acétate de cellulose. De manière préférée, on utilise des esters et notamment l'acétate pouvant avoir subi des traitements conférant au moins partiellement une biodégradabilité contrôlée de l'ester, par abaissement de la teneur en acide aliphatique, de préférence en acide acétique, en dessous de 53% et de préférence en dessous de 49%, selon divers procédés de dégradation, par exemple par hydrolyse, comme décrit dans la demande allemande non publiée P 43 22 965.4, ou par traitement alcalin à l'aide d'ammoniac ou d'une base comprenant au mois un groupe NH ou NH₂, tel que décrit dans la demande allemande non publiée n° P 43 22 966.2. Par "teneur en acide aliphatique inférieur (acétique)", on entend au sens de l'invention, la proportion d'acide aliphatique inférieur (acétique) lié dans l'ester (acétate) de cellulose, exprimée en pourcentage en masse. La biodégradabilité est contrôlée en ajustant le taux de dégradation de l'ester de cellulose en fonction de l'utilisation envisagée (forme de culture, nature de l'espèce cultivée, etc....).

La matière fibreuse se présente sous forme de fils continus ou de fibres discontinues ou de câbles, plate ou texturée, de section variée telle que ronde en Y ou d'autres formes, en disposition au hasard ou orientée, de préférence sous forme de câbles, en vrac ou compactées pour former des structures compactes individuelles, de taille réduite, telles que mini-mottes, appelés aussi bouchons, ou collectives, plus importantes telles que blocs ou pains. Les fils sont généralement obtenues par filage d'une solution, appellée collodion, d'acétate de cellulose dans un solvant organique approprié tel que acide acétique, acétone, selon les procédés décrits dans la référence ci-dessus. Par "mini-mottes" on entend généralement des supports de forme sensiblement cylindrique ou tronconique ou parallépipèdique de 2 à 4 cm de long et 2 à 5 cm de diamètre; de même par "blocs" on entend des supports plus volumineux, de forme sensiblement parallépipèdique, de 10 à 100cm de longueur, 10 à 15 cm de largeur et 5 à 10 cm d'épaisseur, le terme de "pain" étant plutôt utilisé pour les supports de plus fort volume. A noter que les formes indiquées ci-dessus sont celles les plus courantes mais que toute autre forme convenable de support fait également partie de l'invention.

Le substrat utilisé dans le procédé selon l'invention peut contenir en outre divers additifs:
- soit insérés entre les fibres: eau, éléments nutritifs ou protecteurs de la plantes( matière active agrochimique).
- soit déposés et fixés sur la surface des fibres, soit et de préférence incorporés dans leur masse, des adjuvants de filage ou de cohésion non phytotoxiques des éléments fibreux entre eux ou encore des éléments utiles pour la culture du matériel végétal tels que matière active agrochimique, fongicide ou insecticide notamment. Comme fongicide on peut par exemple citer des fongicides des familles des triazoles tels que par exemple le triticonazole, ou de l'acide phosphoreux ses sels et ses esters ou de la famille des 2-(3,4-diméthoxyphényl) benzamides. Plus généralement toute matière active agrochimique notamment parmi celles connues peut être utilisée.

Le substrat utilisé dans le procédé selon l'invention peut encore être mélangé, dans des proportions variables, avec des substrats de culture en soi connus tels que par exemple, tourbes brunes ou blondes, fibres et fils d'origine cellulosique (coton, papier...), fibres de bois ou de coco ou encore de supports minéraux tels que laine de roche ou laine de verre.
L'invention sera mieux comprise à l'aide des exemples ci-dessous, qui sont donnés à titre illustratif mais non limitatif.

### Exemple : Essai en serre:

Comme substrat on utilise un bouchon, cylindre composé de fibres d'acétate de cellulose, de 1 cm de long et 1 cm de diamètre, qui ont été obtenues comme suit: on a préparé une solution de filage contenant 28% en poids d'acétate de cellulose et 0,5% de dioxyde de titane dans l'acétone. La teneur en eau de cette solution de filage est réglée à 3% en poids. L'acétate de cellulose utilisé a une teneur en acide acétique de 55,4% et un degré de polymérisation(DP) de 220. La solution de filage est filtrée et filée à sec sur une installation usuelle de filage de câble. Les filaments d'acétate de cellulose sont rassemblés en un ruban, frisés à l'aide d'un machine de frisage à compression et séchés dans un séchoir à tambour. A l'entrée de cette machine de frisage, le ruban a une vitesse d'entrée de 550 m/min. Le séjour du ruban de filaments d'acétate de cellulose dans le séchoir à tambour est de 5 minutes. Le câble de filtre des filaments d'acétate de cellulose, sortant de la machine de frisage, est déposée sans tension à l'aide d'une machine emballeuse et comprimée en une balle; celle-ci a une teneur résiduelle en humidité de 5,5% en poids. Le câble ainsi obtenu a un titre global de 38.500 dtex et un titre unitaire par filament de 3,3 dtex, la section transversale des filaments étant en forme de Y.

Par tronçonnage de ce câble on crée des bouchons tels que décrits ci-dessus. Les graines de différentes espèces(carotte, variété Nandor; pétunia, variété Nain compact (Royal Fleurs); blé, variété Talent) sont placées dans des bouchons à raison d'une graine par bouchon. On teste simultanément un témoin sans bouchon, c'est à dire à graine nue. Les bouchons sont placés à raison de 20 bouchons par espèce et par répétition, sur 20 ml d'un mélange préalablement humidifié, constitué pour moitié de sable et pour moitié de terreau universel (marque SNED ) à base de tourbe et de carex et de sphaignes . L'ensemble est arrosé 2 à 3 fois par semaine. L'expérience est conduite en serre. La température est de 22°C, avec une humidité relative d'environ 60%. Ces serres permettent d'utiliser l'éclairage naturel. Néanmoins lorsque celui-ci est trop faible (inférieur à 250 µE.m⁻².s ⁻¹), on utilise à un éclairage d'appointsur rampe mobile, réglé de manière que l'éclairement soit de 500 µE.m⁻².s ⁻¹, lorsque la lampe est au dessus des plantes, et de 70 µE.m⁻².s ⁻¹, lorsqu'elle est à l'opposé. La durée de cet éclairage d'appoint est limité à 14 heures par photopériode.

On observe d'abord le taux de germination puis, au bout de 7 jours après le semis, la hauteur des plantes. Dans ces conditions, on observe que le taux de germination est respectivement pour le pétunia, de 73% pour 85% pour le témoin, pour la carotte de 72%(80%) et pour le blé de 98%(93%). La hauteur de plantes est, dans le cas du blé, respectivement de 11,9 cm pour le substrat selon l'invention contre 12,3 cm pour le témoin. Dans tous les cas, les différences ne sont pas significatives.

Ceci montre l'excellente propriété du substrat non stérile selon l'invention pour la culture des plantes.

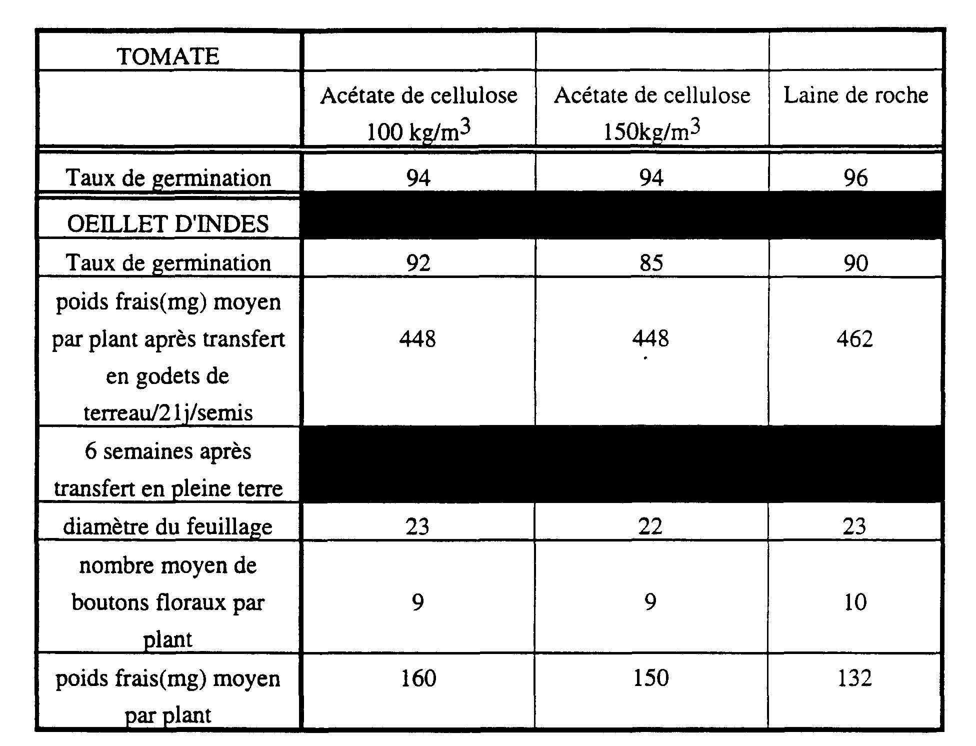

Les analyses de variance ne montrent aucune différence entre les résultats.

L'ensemble de ces résultats montre l'excellente propriété du substrat selon l'invention.

### Exemple 3: Essai en serre:

On opère comme à l'exemple 2 si ce n'est qu'on utilise des graines d'autres cultures et que les plaques sont mainntenues en confinement sous bâche pendant 3 jours avant d'être placées en culture sous arrosage automatique.

Dans ces conditions, on obtient les taux de germination suivants:

| Espèces | nombre de graines semées | acétate de cellulose | Laine de roche |
|---|---|---|---|
| concombre | 8 | 100 | 100 |
| brocoli | 28 | 93 | 93 |
| oeillet | 8 | 88 | 75 |
| aubergine | 8 | 100 | 75 |
| coton | 8 | 75 | 38 |
| gerbera | 8 | 75 | 50 |
| radis | 8 | 100 | 100 |
| scarole | 8 | 100 | 100 |
| oignon | 16 | 88 | 100 |
| melon | 16 | 75 | 88 |
| geranium | 8 | 100 | 88 |
| chicorée | 8 | 75 | 75 |
| céleri | 8 | 100 | 88 |
| chou | 8 | 100 | 100 |
| poireau | 8 | 88 | 62 |
| laitue | 8 | 75 | 100 |

### Exemple 4: culture sur bouchons d'acétate de cellulose de biodégradabilité contrôlée

Comme substrat on utilise un bouchon, cylindre composé de fibres d'acétate de cellulose, de 20 mm de long et 8 mm de diamètre, qui ont été obtenues comme à l'exemple 2, si ce n'est qu'on ajoute à la solution de filage respectivement de l'urée et de l'urotropine, molécules permettant d'assurer la biodégrabilité de l'acétate, de telle sorte que leur concentrattion finale dans les fibres soient d'environ 5%. Leur densité est de 125 kg/m³. On utilise simultanément un témoin bouchon en laine de roche de marque Grodan et des témoins bouchons de 20 mm de diamètre et de densité 100 kg/m3 et 150 kg/m3 décrits dans les exemples précédents.

Les conditions d'arrosage et de réglage de la serre sont comme à l'exemple 2.

Dans ces conditions on observe les taux de germination suivants:

| culture Acétate | de cellulose 100kg/m³ | Acétate de cellulose 150 kg/m³ | Laine de roche | Acétate de cellulose 125 kg/m³ = ¹ | 1 + urée 5% | 1+ urotropine 5% |
|---|---|---|---|---|---|---|
| Tomate | 95 | 93 | 97 | 89 | 98 | 87 |
| Brocoli | 95 | 93 | 97 | 89 | 84 | 87 |

Les analyses de variance ne montrent aucune différence entre les résultats.

L'ensemble de ces résultats montre l'excellente propriété du substrat selon l'invention.

### Exemple 5: Relargage progressif dans l'eau d'une matière active agrochimique incluse dans des fibres d'acétate de cellulose

Des fibres d'acétate de cellulose, de 20 mm de long et 8 mm de diamètre, qui ont été obtenues comme à l'exemple 1, si ce n'est qu'on ajoute à la solution de filage une quantité simple respectivement double de triticonazole, matière active agrochimique fongicide, de telle sorte que leur concentration finale dans les fibres soient respectivement d'environ 5 et 10% en poids.%. Les filaments obtenus ont un titre unitaire respectivement de 2,2 et 15 dtex, leur section étant ronde.

On ajoute 20 mg de fibres dans un flacon contenant 300 ml d'eau déminéralisée. Le flacon est placé sur un agitateur orbital, dont le plateau tourne à raison de 100 tours/ min. Il ya un flacon par échantillon et par dose.

Au bout d'un temps déterminé, on prélève, à l'aide d'une seringue, deux échantillons, par aspiration d'une fraction de la phase liquide. La solution prélevée est passée sur un filtre de maille 0,2µm. Le dosage est effectué par HPLC. Les concentrations sont déterminées en compararaison avec un étalon. Les résultats sont reportés sur le graphique de la figure 1.

### Exemple 6: Test sur orge contre l'oïdium avec un mélange fibres/terreau

Des fibres d'acétate de cellulose sont obtenues comme à l'exemple 5 si ce n'est que les filaments obtenus ont un titre unitaire respectivement de 2,2, 7,8 et 15 dtex.

On incorpore 2,4 g de fibres ainsi obtenues à 100 g de terreau à l'aide d'un mélangeur Warring Blendor. Le mélange est repris puis brassé dans 2,9 kg de terreau. La moitié du substratobtenu est répartie dans des pots de section carrée de 7 cm de côté à raison d'environ 300 ml par substrat et par pot.

Le reste du substrat est repris er mélangé à nouveau à 1,5 kg de terreau. Le mélang obtenu contient ainsi 2 fois moins de fibres contenant la matière active que le mélange précédent. Comme précédemment, la moitié du substrat obtenu est répartie dans des pots de section carrée de 7 cm de côté à raison d'environ 300 ml par substrat et par pot. Cette opération est renouvelée jusqu'à obteneir la concentration désirée en fibres dans le terreau .

De la même manière on fabrique des échantillons contenant des fibres de 15 dtex sans matière active comme témoin.

On fabrique d'autres échantillons témoins contenant la matière active formulée sous une autre forme que fibreuse en remplaçant les 2,4 g de fibres par 6,4 g de poudre pour traitement de semence contenant 2,5 % en poids de triticonazole, la quantité de terreau étant ramenée de 3 à 2 kg.

On fabrique d'autres échantillons témoins en remplissant les pots avec du terreau sans fibres d'acétate de cellulose dans lesquels on a semé des graines non traitées et des des graines traitées avec la formulation commercialisée sous la marque Réal, suspension concentrée pour traitement de semences contenant 209 g/l de triticonazole comme matière active, à la dose de 120 g/ quintal.

Les graines sont placées dans les pots à raison de 48 graines soit 2,16 g/pöt puis recouvertes par une fine couche de terreau non traité.

Les plantes sont cultivées en serre avec arrosages manuels, les conditions de la serre (température, humidité, éclairage) étant celles indiquées à l'exemple 1. L'orge est contaminé respectivement 8 jours et 16 jours après le semis par de l'oïdium (*Erisyphe gramini hordei*) par balayage des pots par d'autres pots contenant de l'orge contamin. La lecture visuelle est effectuée 8 jours après la deuxième contamination. Dans ces conditions on observe les résultats suivants (m.a. = matière active):

| Type de substrat | produit formulé par pot (mg) | matière active par pot (mg) | nombre de plantes contaminées | remarques |
|---|---|---|---|---|
| Terreau + graines non traitées | 0 | 0 | 100 | |
| Terreau non traité + graines traitées au Réal | 3 | 0,6 | 45 | phytotoxicité apparente |
| Terreau + fibres sans m.a. | 100 | 0 | 100 | |
| Terreau + fibres 2,2 dtex avec m.a. | 100 | 10 | 1 | |
| " | 6.25 | 0.62 | 9 | |
| Terreau + fibres 7,8 dtex avec m.a. | 100 | 10 | 2 | |
| " | 6.25 | 0.62 | 9 | |
| Terreau + fibres 15 dtex avec m.a. | 100 | 10 | 2 | |
| " | 6.25 | 0.62 | 19 | |

Ces résultats montrent clairement la bonne protection apportée aux plantes par le substrat à base de fibres contenant le triticonazole. De plus ce traitement apporte une protection supérieure à celle apportée par le traitement classique de semences avec le triticonazole tout en évitant les phénomènes de phytotoxicité.

### Exemple 7: Test sur tomate contre le mildiou avec un mélange fibres/terreau

Des fibres d'acétate de cellulose sont obtenues comme à l'exemple 5 si ce n'est _ que les filaments obtenus ont un titre unitaire respectivement de 2,2, 6,3 et 15 dtex et que le triticonazole est remplacé par le N-méthyl-N-éthyl-4-trifluorométhyl-2-(3,4-diméthoxyphényl) benzamide.

On incorpore 1,84 g de fibres ainsi obtenues à 100 g de terreau à l'aide d'un mélangeur Warring Blendor. Le mélange est repris puis brassé dans 0,9 kg de terreau. La moitié du substrat obtenu est répartie dans des pots de section carrée de 7 cm de côté à raison d'environ 300 ml par substrat et par pot.

Le reste du substrat est repris et mélangé à nouveau à 0,5 kg de terreau. Le mélange obtenu contient ainsi 2 fois moins de fibres contenant la matière active que le mélange précédent. Comme précédemment, la moitié du substrat obtenu est répartie dans des pots de section carrée de 7 cm de côté à raison d'environ 300 ml par substrat et par pot. Cette opération est renouvelée jusqu'à obtenir la concentration désirée en fibres dans le terreau .

De la même manière on fabrique des échantillons contenant des fibres de 15 dtex sans matière active comme témoin.

On fabrique d'autres échantillons témoins contenant la matière active formulée sous une autre forme que fibreuse en remplaçant les 1,84 g de fibres par 0,4 g de poudre mouillable contenant 2,5 % en poids de N-méthyl-N-éthyl-4-trifluorométhyl-2-(3,4-diméthoxyphényl) benzamide.

On fabrique d'autres échantillons témoins en remplissant les pots avec du terreau sans fibres d'acétate de cellulose.

Les plants de tomate (variété Marmande) âgés de 10 jours sont repiqués dans les pots ainsi confectionnés à raison de 1 plant par pot.

Les palntes sont cultivées en serre.

Les plantes sont cultivées en serre avec arrosages manuels, les conditions de la serre (température, humidité, éclairage) étant celles indiquées à l'exemple 1. Les palntes sont contaminés 15 jours après le repiquage par pulvérisation (pulvérisateur Fisher) de spores de mildiou (*Phytophthora infestans*) obtenues par mise en suspension aqueuse à raison de 30 000 sp/ml développées sur des feuilles de tomates.

Les plants sont déposés dans des cellules de cultures en serre à 20°C et 90% d'humidité relative.

La lecture visuelle est effectuée 6 jours après la contamination. Dans ces conditions on observe les résultats suivants (m.a. = matière active):

| Type de substrat | produit formulé par pot (mg) | matière active par pot (mg) | nombre de plantes contaminées |
|---|---|---|---|
| Terreau non traité | 0 | 0 | 100 |
| Terreau + fibres sans m.a. | 100 | 0 | 100 |
| Terreau + fibres 2,2 dtex avec m.a. | 115 | 10 | 23 |
| Terreau + fibres 7,8 dtex avec m.a. | 119 | 10 | 26 |
| Terreau + fibres 15 dtex avec m.a. | 115 | 10 | 25 |

## Revendications

1. Procédé de culture de plantes agricoles ou horticoles, caractérisé en ce qu'on utilise un substrat de culture de matériel de reproduction végétal essentiellement constitué d'une matière fibreuse non stérile à base d'un ester d'acide aliphatique inférieur et de cellulose.

2. Procédé selon la revendication 1, caractérisé en ce que la matière fibreuse est à base d'un ester d'acide aliphatique inférieur et de cellulose à biodégradabilité contrôlée.

3. Procédé selon l'une des revendications 1 ou 2, caractérisé en ce que la matière fibreuse est à base d'un acétate de cellulose.

4. Procédé selon l'une des revendications 1 à 3, caractérisé en ce que la matière fibreuse est sous forme de vrac.

5. Procédé selon l'une des revendications 1 à 3, caractérisé en ce que la matière fibreuse est sous forme compactée.

6. Procédé selon la revendication 5, caractérisé en ce que la matière fibreuse est sous forme de mini-motte.

7. Procédé selon la revendication 5, caractérisé en ce que la matière fibreuse est sous forme de bloc.

8. Procédé selon l'une des revendications 1 à 7, caractérisé en ce que l'ester de cellulose a une teneur en acide aliphatique inférieur à 53% en masse.

9. Procédé selon la revendication 8, caractérisé en ce que la teneur en acide aliphatique inférieur est inférieure à 49%.

10. Procédé selon l'une des revendications 1 à 9, caractérisé en ce qu'il contient, outre l'ester de cellulose, un adjuvant non phytotoxique de fabrication de la matière fibreuse.

11. Procédé selon l'une des revendications 1 à 10, caractérisé en ce que le substrat contient, outre l'ester de cellulose, au moins une matière active agrochimique,

12. Procédé selon la revendication 11, caractérisé en ce que la matière active agrochimique est un fongicide.

13. Procédé selon l'une des revendications 1 à 12, caractérisé en ce que le substratl contient, outre l'ester de cellulose, au moins un substrat de nature différente.

14. Procédé selon la revendication 13, caractérisé en ce qu'il contient, outre l'ester de cellulose, au moins un substrat de type tourbe.

15. Procédé selon la revendication 13, caractérisé en ce qu'il contient, outre l'ester de cellulose, au moins un substrat de type laine de roche.

16. Procédé selon l'une des revendications 1 à 15, caractérisé en ce que le substrat contient, outre l'ester de cellulose, au moins un élément nutritif.

17. Procédé selon l'une des revendications 1 à 16, caractérisé en ce que l'élément nutritif ou le protecteur de la plante, tel qu'une matière active agrochimique, est présent à raison de 0,01 et 90 % en poids, de préférence de 1 à 50% en poids et, de manière particulièrement préférée, de 2 à 30%.

18. Procédé selon l'une des revendications 1 à 17, caractérisé en ce que le matériel végétal est une graine.

19. Procédé selon l'une des revendications 1 à 17, caractérisé en ce que le matériel végétal est une bouture.

20. Procédé selon l'une des revendications 1 à 17, caractérisé en ce que le matériel végétal est une plantule.

21. Procédé selon l'une des revendications 1 à 17, caractérisé en ce que le matériel végétal est un tissu méristématique.

## Patentansprüche

1. Verfahren zur Kultur von Pflanzen in der Landwirtschaft und im Gartenbau, dadurch gekennzeichnet, daß ein Substrat zur Kultur von pflanzlichem Vermehrungsmaterial verwendet wird, das im wesentlichen aus einem nicht sterilen Fasermaterial auf der Basis eines Esters einer niederen aliphatischen Säure und Cellulose besteht.

2. Verfahren nach Anspruch 1, dadurch gekennzeichnet, daß das Fasermaterial auf einem Ester einer niederen aliphatischen Säure und Cellulose mit kontrollierter biologischer Abbaubarkeit basiert.

3. Verfahren nach einem der Ansprüche 1 oder 2, dadurch gekennzeichnet, daß das Fasermaterial auf Celluloseacetat basiert.

4. Verfahren nach einem der Ansprüche 1 bis 3, dadurch gekennzeichnet, daß das Fasermaterial in Form von Schüttgut vorliegt.

5. Verfahren nach einem der Ansprüche 1 bis 3, dadurch gekennzeichnet, daß das Fasermaterial in kompaktierter Form vorliegt.

6. Verfahren nach Anspruch 5, dadurch gekennzeichnet, daß das Fasermaterial in Form von Mini-Formlingen vorliegt.

7. Verfahren nach Anspruch 5, dadurch gekennzeichnet, daß das Fasermaterial in Form von Blöcken vorliegt.

8. Verfahren nach einem der Ansprüche 1 bis 7, dadurch gekennzeichnet, daß der Mengenanteil der aliphatischen Säure in dem Celluloseester unter 53 Masse-% liegt.

9. Verfahren nach Anspruch 8, dadurch gekennzeichnet, daß der Mengenanteil der aliphatischen Säure unter 49 % liegt.

10. Verfahren nach einem der Ansprüche 1 bis 9, dadurch gekennzeichnet, daß das Substrat neben dem Celluloseester einen nicht phytotoxischen Hilfsstoff für die Herstellung des Fasermaterials enthält.

11. Verfahren nach einem der Ansprüche 1 bis 10, dadurch gekennzeichnet, daß das Substrat neben dem Celluloseester mindestens einen agrochemischen Wirkstoff enthält.

12. Verfahren nach Anspruch 11, dadurch gekennzeichnet, daß es sich bei dem agrochemischen Wirkstoff um ein Fungizid handelt.

13. Verfahren nach einem der Ansprüche 1 bis 12, dadurch gekennzeichnet, daß das Substrat neben dem Celluloseester mindestens ein Substrat unterschiedlicher Art enthält.

14. Verfahren nach Anspruch 13, dadurch gekennzeichnet, daß es neben dem Celluloseester mindestens ein Substrat vom Typ Torf enthält.

15. Verfahren nach Anspruch 13, dadurch gekennzeichnet, daß es neben dem Celluloseester mindestens ein Substrat vom Typ Gesteinswolle enthält.

16. Verfahren nach einem der Ansprüche 1 bis 15, dadurch gekennzeichnet, daß das Substrat neben dem Celluloseester mindestens einen Nährstoff enthält.

17. Verfahren nach einem der Ansprüche 1 bis 16, dadurch gekennzeichnet, daß der Nährstoff oder der Stoff zum Schutz der Pflanze, beispielsweise ein agrochemischer Wirkstoff, in Mengenanteilen von 0,01 bis 90 Gew.-%, vorzugsweise 1 bis 50 Gew.-% und besonders bevorzugt 2 bis 30 % vorliegt.

18. Verfahren nach einem der Ansprüche 1 bis 17, dadurch gekennzeichnet, daß es sich bei dem pflanzlichen Material um Samen handelt.

19. Verfahren nach einem der Ansprüche 1 bis 17, dadurch gekennzeichnet, daß es sich bei dem pflanzlichen Material um Stecklinge handelt.

20. Verfahren nach einem der Ansprüche 1 bis 17, dadurch gekennzeichnet, daß es sich bei dem pflanzlichen Material um Keimlinge handelt.

21. Verfahren nach einem der Ansprüche 1 bis 17, dadurch gekennzeichnet, daß es sich bei dem pflanzlichen Material um meristematisches Gewebe handelt.

## Claims

1. Method of culturing agricultural or horticultural plants, characterized in that a culture substrate of plant propagation material is used which is essentially composed of a non-sterile fibrous material based on an ester of a lower aliphatic acid and cellulose.

2. Method according to Claim 1, characterized in that the fibrous material is based on an ester of a lower aliphatic acid and cellulose of controlled biodegradability.

3. Method according to one of Claims 1 and 2, characterized in that the fibrous material is based on a cellulose acetate.

4. Method according to one of Claims 1 to 3, characterized in that the fibrous material is in bulk form.

5. Method according to one of Claims 1 to 3, characterized in that the fibrous material is in compacted form.

6. Method according to Claim 5, characterized in that the fibrous material is in the form of a mini-clump.

7. Method according to Claim 5, characterized in that the fibrous material is in the form of a block.

8. Method according to one of Claims 1 to 7, characterized in that the cellulose ester has a content of lower aliphatic acid of less than 53 % by mass.

9. Method according to Claim 8, characterized in that the content of lower aliphatic acid is less than 49%.

10. Method according to one of Claims 1 to 9, characterized in that it contains, in addition to the cellulose ester, a non-phytotoxic adjuvant for manufacturing the fibrous material.

11. Method according to one of Claims 1 to 10, characterized in that it contains, in addition to the cellulose ester, at least one agrochemical active ingredient.

12. Method according to Claim 11, characterized in that the agrochemical active ingredient is a fungicide.

13. Method according to one of Claims 1 to 12, characterized in that the substrate contains, in addition to the cellulose ester, at least one substrate of a different nature.

14. Method according to Claim 13, characterized in that it contains, in addition to the cellulose ester, at least one peat-type substrate.

15. Method according to Claim 13, characterized in that it contains, in addition to the cellulose ester, at least one rock-wool-type substrate.

16. Method according to one of Claims 1 to 15, characterized in that the substrate contains, in addition to the cellulose ester, at least one nutrient element.

17. Method according to one of Claims 1 to 16, characterized in that the nutrient element or the plant protectant, such as an agrochemical active ingredient, is present at from 0.01 to 90% by weight, preferably from 1 to 50% by weight, particularly preferably from 2 to 30% by weight.

18. Method according to one of Claims 1 to 17, characterized in that the plant material is a seed.

19. Method according to one of Claims 1 to 17, characterized in that the plant material is a cutting.

20. Method according to one of Claims 1 to 17, characterized in that the plant material is a plantlet.

21. Method according to one of Claims 1 to 17, characterized in that the plant material is a meristematic tissue.
